# FASCICULE DE BREVET EUROPEEN

(11) **EP 0 762 585 B1**
(45) Date de publication et mention de la délivrance du brevet: **22.11.2000**
(21) Numéro de dépôt: 96401840.2
(22) Date de dépôt: 28.08.1996
(51) Int. Cl.: H02B 1/32, H02G 5/00

(54) **Accessoire de support pour l'assujettissement d'un barreau à un autre élément de châssis,notamment pour le support d'appareils électriques**
Befestigungszubehör zur Montage an ein Gestell, insbesondere für Befestigung von elektrischen Apparaten
Support accessory for mounting on a chassis, especially for the support of electrical apparatus

(30) Priorité: 30.08.1995 FR 9510215
(43) Date de publication de la demande: 12.03.1997
(73) Titulaire: LEGRAND, F-87045 Limoges Cédex (FR); LEGRAND SNC, F-87045 Limoges (FR)
(72) Inventeur: Le Bihan, Loic, 76000 Rouen (FR)
(74) Mandataire: CABINET BONNET-THIRION

(56) Documents cités:
- EP-A- 0 472 409
- DE-A- 2 556 307
- DE-A- 2 944 372
- DE-U- 7 733 041
- DE-U- 7 736 386
- FR-A- 2 638 033

## Description

La présente invention concerne d'une manière générale les châssis qui, pour le support, par exemple, d'appareils électriques, comportent, à la manière d'une échelle, un ou plusieurs barreaux rapportés sur un autre élément de châssis.

Ces châssis peuvent par exemple former l'équipement de base de certaines armoires électriques.

La présente invention vise plus particulièrement le cas où, pour l'assujettissement d'un quelconque des barreaux à un autre élément de châssis commun à l'ensemble, il est mis en oeuvre un accessoire de support qui, à la manière d'une entretoise, le maintient à distance de cet autre élément de châssis.

Globalement, un tel accessoire de support comporte, d'une part, une infrastructure, qui doit être propre à permettre de le rapporter sur l'élément de châssis à équiper, et, d'autre part, une superstructure, qui doit présenter un logement par lequel elle doit être apte à recevoir l'une des extrémités du barreau à assujettir à cet autre élément de châssis.

Les documents DE-U-77 33 041 et DE-U-77 36 386 décrivent des accessoires de support de ce type.

Dans l'accessoire décrit par le document DE-U-77 36 386, la superstructure comporte de plus, parallèlement l'un à l'autre, deux bras, avec, entre ces bras, du flanc interne de l'un au flanc interne de l'autre, un logement de réception d'un barreau.

Ces bras exercent une fonction de leviers et le maintien d'un barreau dans le logement nécessite leur déplacement relatif.

L'une des difficultés, en l'espèce, tient à ce que, suivant les installations, le barreau peut relever de l'un ou l'autre d'au moins deux types différents.

Il peut s'agir tout d'abord de simples barres, de section transversale rectangulaire, suivant d'ailleurs des dimensions elles-mêmes éventuellement différentes de l'une à l'autre, et présentant, éventuellement, de place en place, suivant leur longueur, des perçages, pour la fixation des appareils électriques.

Mais, il peut s'agir également de profilés, communément appelés rails, dont les sections transversales peuvent également sensiblement varier de l'un à l'autre, mais qui ont tous en général en commun de présenter, pour la fixation des appareils électriques, deux retours en équerre dirigés en sens opposés l'un par rapport à l'autre.

Dans la demande de brevet allemand No DE 29 44 372, la structure de l'accessoire de support comporte au moins deux logements de types différents, correspondant chacun respectivement à des barreaux eux-mêmes de types différents.

Mais cet accessoire de support est relativement massif, au détriment de sa capacité.

Il en est sensiblement de même dans la demande de brevet français No FR 2 638 033, qui répond à d'autres possibilités, mais dans laquelle la mise en place des barreaux implique, de surcroît, pour tous, un engagement longitudinal dans le logement concerné.

La difficulté, dans la réalisation des accessoires de support du genre en cause, tient également à ce que, suivant les installations, l'élément de châssis sur lequel doivent être rapportés de tels barreaux peut, lui aussi, être différent.

Le plus souvent, il s'agit d'un simple montant, dûment rendu solidaire de l'ossature d'armoire électrique à équiper, en étant par exemple adossé et fixé à la plaque de fond de celle-ci.

Mais il peut s'agir également d'une embase qui, formant par elle-même une telle plaque de fond, présente en saillie des nervures formant rail, c'est-à-dire des nervures comportant des retours en équerre dirigés en sens opposés l'un par rapport à l'autre, et qui est ainsi apte à recevoir d'éventuels accessoires, et, notamment, d'éventuels accessoires de support du genre ici en cause.

La présente invention a d'une manière générale pour objet un accessoire de support qui est avantageusement apte à se satisfaire par lui-même des diverses conditions précédentes.

Cet accessoire de support, qui est donc destiné à permettre l'assujettissement d'un barreau à un autre élément de châssis, est du genre comportant, d'une part, une infrastructure, qui est propre à permettre de le rapporter sur l'élément de châssis à équiper, et, d'autre part, une superstructure, qui comporte au moins deux logements par chacun desquels elle est apte à recevoir l'une des extrémités d'un barreau à assujettir à cet élément de châssis, la superstructure comportant, parallèlement l'un à l'autre, deux bras, avec, entre ces bras, du flanc interne de l'un de ceux-ci au flanc interne de l'autre, au moins un logement, caractérisé en ce que l'extrémité du barreau est reçue par simple emboîtement dans chacun des logements, en ce qu'il y a, sur le flanc externe de l'un au moins des bras, au moins d'un logement d'un premier type, et, entre ces bras, du flanc interne de l'un au flanc interne de l'autre, au moins un logement d'un deuxième type différent du premier, et, en ce qu'un logement du premier type se réduit à une fente formée entre deux doigts, dont l'un, au moins, est élastiquement déformable, et qui comportent, chacun, en direction l'un de l'autre, un cran de retenue précédé d'un chanfrein d'engagement.

Ces logements de types différents correspondent chacun respectivement à des barreaux eux-mêmes de types différents.

Quoi qu'il en soit, les bras que comporte l'accessoire de support suivant l'invention en augmente avantageusement la capacité, un logement, au moins, pouvant être prévu entre ces bras.

Préférentiellement, l'accessoire de support suivant l'invention comporte une pluralité de logements relevant d'un premier type et une pluralité de logements relevant d'un deuxième type.

Ainsi, que le barreau soit une barre ou qu'il s'agisse d'un rail, l'accessoire de support suivant l'invention offre à ce barreau plusieurs positions d'implantation différentes, et/ou il est possible, si désiré, d'installer sur cet accessoire de support plusieurs barreaux de types éventuellement différents.

Suivant un deuxième aspect, l'accessoire de support suivant l'invention est encore caractérisé d'une manière générale en ce que son infrastructure est équipée d'au moins deux moyens d'assujettissement de types différents.

En pratique, dans une forme préférée de réalisation, elle comporte, latéralement, dos à dos, à titre de moyens d'assujettissement d'un premier type, deux rainures, par lesquelles elle est apte à être engagée, et, en pratique, encliquetée, sur deux retours en équerre de l'élément de châssis à équiper dirigés en sens opposés l'un par rapport à l'autre.

Ces rainures trouvent donc notamment leur application lorsque cet élément de châssis est une embase du type de celle évoquée ci-dessus.

Corollairement, l'infrastructure de l'accessoire de support suivant l'invention comporte, également, en saillie sur sa surface inférieure, à titre de moyens d'assujettissement d'un deuxième type, au moins un pion, et, préférentiellement, deux, par lesquels elle est apte à être engagée dans des perçages de l'élément de châssis à équiper.

Ces pions trouvent notamment leur application lorsque cet élément de châssis est un montant.

En bref, de manière plus ou moins universelle, l'accessoire de support suivant l'invention se satisfait avantageusement de conditions de fixation et/ou d'utilisation très différentes.

Les caractéristiques et avantages de l'invention ressortiront d'ailleurs de la description qui va suivre, à titre d'exemple, en référence aux dessins schématiques annexés sur lesquels :
la figure 1 est une vue en perspective d'un accessoire de support suivant l'invention, vu de l'avant ;
la figure 2 en est une vue en perspective vu de l'arrière ;
la figure 3 en est une vue en élévation de face, suivant la flèche III de la figure 1 ;
la figure 4 reprend, à échelle supérieure, le détail de la figure 3 repéré par un encart IV sur cette figure 3 ;
la figure 5 est une vue en coupe longitudinale de l'accessoire de support suivant l'invention, suivant la ligne V-V de la figure 3 ;
la figure 6 en est une vue partielle en coupe transversale, suivant la ligne VI-VI de la figure 3 ;
la figure 7 reprend, à échelle supérieure, le détail de la figure 6 repéré par un encart VII sur cette figure 6 ;
la figure 8 est une vue partielle en coupe de l'accessoire de support suivant l'invention, suivant la ligne brisée VIII-VIII de la figure 6 ;
les figures 9A, 9B, 9C sont des vues partielles en perspective se rapportant chacune respectivement à la fixation de l'accessoire de support suivant l'invention sur divers éléments de châssis de types différents ;
les figures 10A, 10B, 10C, 10D, 10E, 10F sont des vues partielles en perspective, et, plus précisément, en perspective éclatée en ce qui concerne la figure 10D, illustrant l'implantation de barreaux de types différents sur l'accessoire de support suivant l'invention.

Tel qu'illustré sur ces figures, il s'agit, pour la constitution d'un châssis propre, par exemple, au support d'appareils électriques non représentés, d'assujettir un quelconque barreau 10A, 10'A, 10B, 10'B à un quelconque autre élément de châssis 11A, 11'A, 11B, et il est mis en oeuvre, pour cet assujettissement, un accessoire de support 12 faisant entretoise, c'est-à-dire un accessoire de support 12 maintenant écarté d'un tel élément de châssis 11A, 11'A, 11B un tel barreau 10A, 10'A, 10B, 10'B.

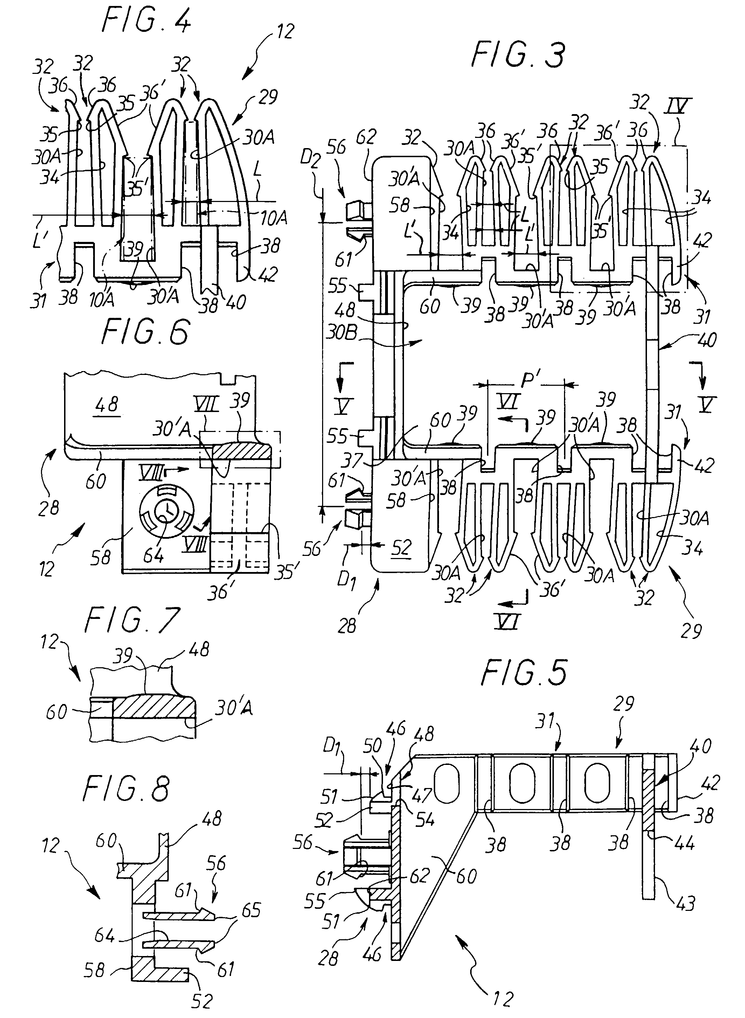

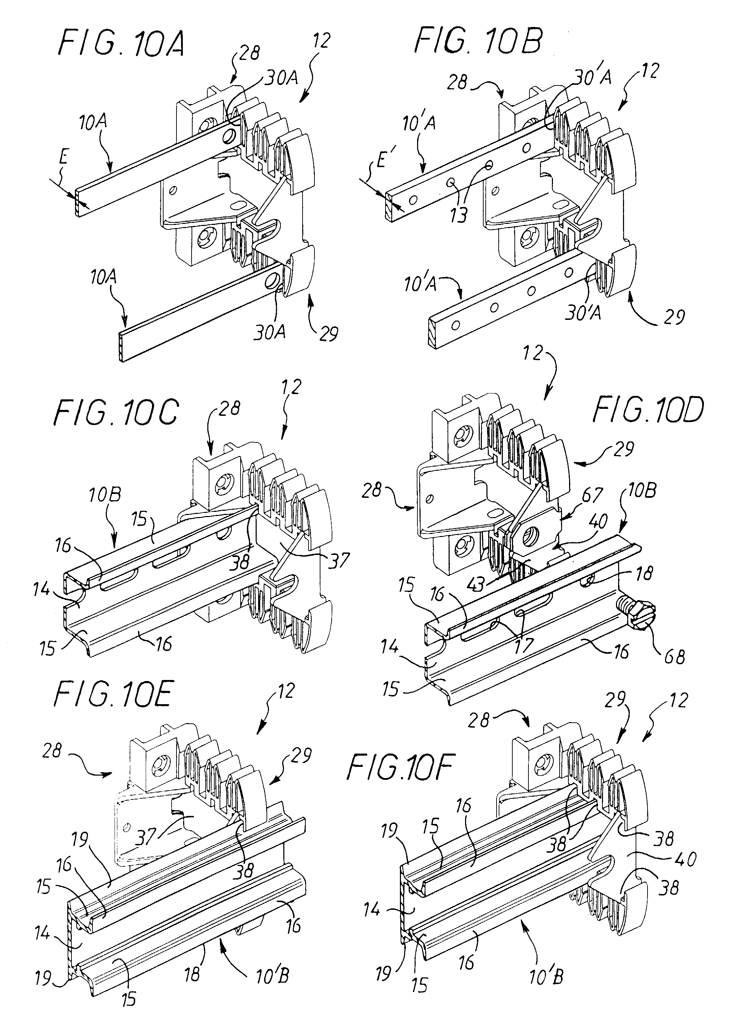

Selon un premier type, les barreaux 10A, 10'A sont de simples barres de section transversale rectangulaire, tel que représenté sur les figures 10A et 10B, et tel que schématisé en traits interrompus sur la figure 4.

Dans la forme de réalisation représentée, ces barreaux 10A, 10'A ont des dimensions identiques, sauf en ce qui concerne leurs épaisseurs E, E'.

En pratique, l'épaisseur E d'un barreau 10A, mesurée suivant la plus petite dimension de sa section transversale, est inférieure à celle E' d'un barreau 10'A, mesurée dans les mêmes conditions.

Il va de soi, cependant, que la plus grande dimension de la section transversale de ces barreaux 10A, 10'A peut également être différente.

Dans la forme de réalisation représentée, le barreau 10'A de plus grande épaisseur E' présente, de place en place, à pas régulier, suivant sa longueur, des perçages 13, pour la fixation des appareils électriques à fixer.

Il va de soi qu'il peut en être de même pour le barreau 10A de plus faible épaisseur E.

Quoi qu'il en soit, les barreaux 10A, 10'A sont à disposer de chant, avec, vers l'avant, l'une de leurs grandes faces.

Ils s'étendent normalement horizontalement, tel que représenté.

Les barreaux 10B, 10'B sont d'un deuxième type.

Il s'agit, en pratique, de rails, c'est-à-dire de profilés, dont la section transversale est en forme générale de U, avec une partie médiane 14 et deux ailes latérales 15, et qui, pour la fixation d'appareils électriques, présentent, le long du bord libre de leurs ailes latérales 15, des retours en équerre 16 dirigés en sens opposés l'un par rapport à l'autre.

Le barreau 10B présente, de place en place, à pas régulier, suivant sa longueur, sur sa partie médiane 14, des boutonnières 17, avec, au voisinage de chacune de ses extrémités, un perçage 18.

Le barreau 10'B, qui est en pratique un profilé extrudé, comporte, latéralement, dans le prolongement de sa partie médiane 14, des languettes 19, qui s'étendent parallèlement à ses retours en équerre 16, suivant une dimension hors tout sensiblement égale à celle de ces derniers.

Les barreaux 10A, 10'A, 10B, 10'B étant bien connus par eux-mêmes, et ne relevant pas en propre de la présente invention, ils ne seront pas décrits plus en détail ici.

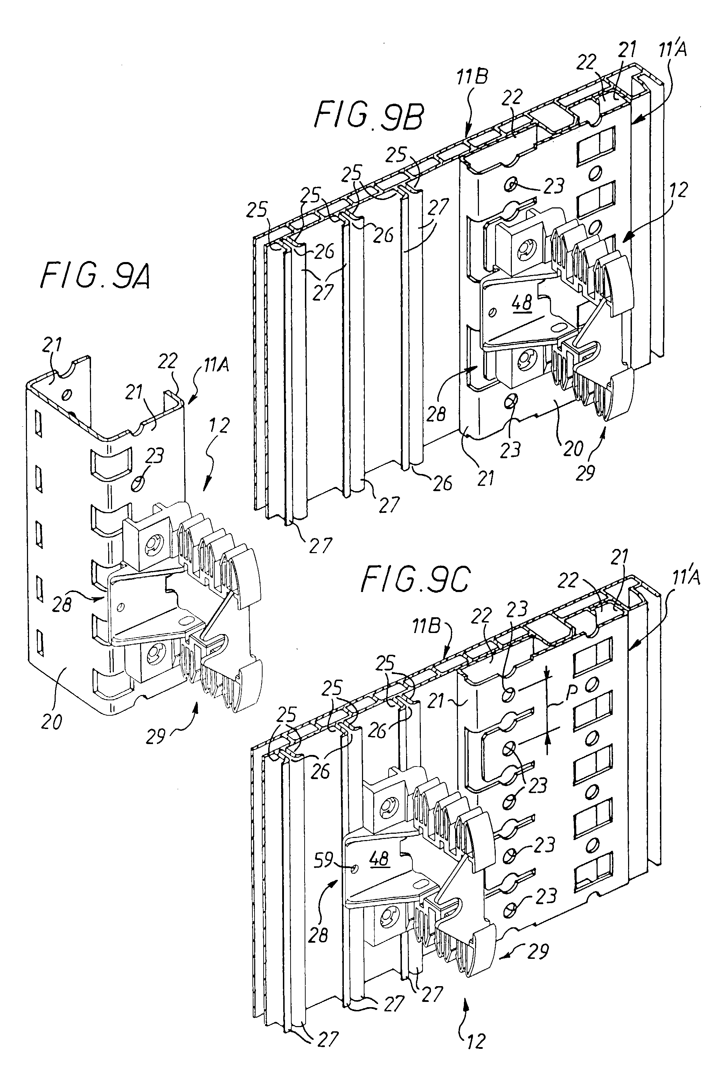

Les éléments de châssis 11A, 11'A, 11B relèvent eux-mêmes de deux types différents, figures 9A, 9B et 9C.

Les éléments de châssis 11A, 11'A sont d'un premier type.

Il s'agit, en pratique, de montants, qui sont à mettre en oeuvre par deux, et qui, normalement, s'étendent verticalement.

Leur section transversale est en forme générale de U, avec une partie médiane 20 et deux ailes latérales 21.

Pour l'élément de châssis 11A, figure 9A, la face avant est formée par l'une des ailes latérales 21, et celle-ci présente, le long de son bord libre, un retour en équerre 22 dirigé vers l'autre aile latérale 21.

Pour l'élément de châssis 11'A, figures 9B et 9C, la face avant est la partie médiane 20, et les ailes latérales 21 présentent chacune un retour en équerre 22.

Alors que l'élément de châssis 11A est susceptible d'être mis en oeuvre isolément, l'élément de châssis 11'A est normalement adossé à un élément de châssis 11B, tel que représenté sur les figures 9B et 9C.

Quoi qu'il en soit, les éléments de châssis 11A, 11'A présentent, chacun, en façade, et, donc, sur une aile latérale 21 pour l'élément de châssis 11A et sur la partie médiane 20 pour l'élément de châssis 11'A, un alignement de perçages 23 échelonnés suivant un pas P régulier le long de leur hauteur.

L'élément de châssis 11B relève d'un deuxième type.

Il s'agit, en pratique, d'une embase destinée à former une plaque de fond pour une armoire électrique.

Cet élément de châssis 11B comporte, en saillie, sur sa face avant, au moins dans sa zone médiane, des nervures 25, qui s'étendent sur toute sa hauteur, parallèlement à ses bords latéraux, et qui, regroupées par paires, avec, entre les deux nervures 25 d'une même paire, un interstice 26, comportent, dos à dos, pour chaque paire, des retours en équerre 27.

Les éléments de châssis 11A, 11'A, 11B ne relevant pas de la présente invention, ils ne seront pas non plus décrits plus en détail ici.

De manière connue en soi, l'accessoire de support 12 suivant l'invention comporte, d'une part, une infrastructure 28, qui est propre à permettre de le rapporter sur l'élément de châssis 11A, 11'A, 11B à équiper, et d'autre part, une superstructure 29, qui, suivant des dispositions décrites plus en détail ultérieurement, présente un logement 30A, 30'A, 30B par lequel elle est apte à recevoir par simple emboîtement l'une des extrémités d'un barreau 10A, 10'A, 10B, 10'B à assujettir à cet élément de châssis 11A, 11'A, 11B.

Suivant l'invention, la superstructure 29 comporte, parallèlement l'un à l'autre, deux bras 31, avec, d'une part, sur le flanc externe de l'un au moins de ces bras 31, et, en pratique, sur le flanc externe de l'un et de l'autre de ceux-ci, au moins un logement 30A, 30'A, et, d'autre part, entre ces bras 31, du flanc interne de l'un au flanc interne de l'autre, au moins un logement 30B.

Dans la forme de réalisation représentée, l'infrastructure 28 et la superstructure 29 forment globalement les deux ailes d'une pièce en équerre.

Les bras 31 s'étendent donc sensiblement perpendiculairement à l'infrastructure 28.

Préférentiellement, et tel que représenté, les logements 30A, 30'A, 30B que comporte la superstructure 29 sont de types différents, 30A, 30'A, d'une part, et 30B, d'autre part, et ils correspondent chacun respectivement à des barreaux 10A, 10'A, 10B, 10'B eux-mêmes de types différents, 10A, 10'A, d'une part, et 10B, 10'B, d'autre part.

Plus précisément, il y a, sur le flanc externe de l'un au moins des bras 31 de cette superstructure 29, au moins un logement 30A, 30'A d'un premier type, et, entre ces bras 31, du flanc interne de l'un au flanc interne de l'autre, au moins un logement 30B d'un deuxième type différent du premier.

En pratique, il y a un logement 30A, 30'A du premier type sur le flanc externe de chacun des bras 31.

Dans la forme de réalisation représentée, un logement 30A, 30'A du premier type se réduit à une fente formée entre deux doigts 32, dont l'un, au moins, est élastiquement déformable.

En outre, dans cette forme de réalisation, il y a un alignement de logements 30A, 30'A du premier type sur le flanc externe de l'un au moins des bras 31.

En pratique, il y a des alignements identiques de logements 30A, 30'A du premier type sur le flanc externe de l'un et de l'autre des bras 31 de la superstructure 29, suivant des dispositions symétriques l'une de l'autre de l'un de ces bras 31 à l'autre.

Globalement, d'un des bras 31 à l'autre, les logements 30A, 30'A s'étendent dos à dos, les doigts 32 qui les délimitent faisant saillie sur le flanc externe de ces bras 31.

Pour chaque bras 31, deux au moins des logements 30A, 30'A ont des largeurs L, L' différentes, la largeur L d'un logement 30A correspondant à l'épaisseur E d'un barreau 10A, tandis que la largeur L' d'un logement 30'A correspond à l'épaisseur E' d'un barreau 10'A.

En pratique, il y a, en alternance, pour chaque bras 31, des logements 30A de plus petite largeur L et des logements 30'A de plus grande largeur L'.

Dans la forme de réalisation représentée, il y a, ainsi, pour chaque bras 31, trois logements 30A et trois logements 30'A, avec, à la racine des bras 31, un logement 30'A de plus grande largeur L', et, à l'extrémité libre de ceux-ci, un logement 30A de plus petite largeur L.

Au repos, et tel que représenté, les deux flancs d'un logement 30A, 30'A convergent l'un vers l'autre, de la racine des doigts 32 correspondants à l'extrémité libre de ceux-ci.

Leur largeur L, L' est donc, en pratique, une largeur moyenne.

Globalement, les logements 30A de plus petite largeur L sont décalés transversalement par rapport aux logements 30'A de plus grande largeur L', en étant plus éloignés que ces derniers du plan médian de l'ensemble passant entre les bras 31.

Pour l'un au moins des logements 30A, 30'A, les deux doigts 32 sont élastiquement déformables.

En pratique, il en est ainsi pour l'ensemble de ces logements 30A, 30'A, sauf en ce qui concerne le logement 30'A de plus grande largeur L' le plus proche de l'infrastructure 28.

En effet, le doigt 32 correspondant de celui-ci, qui est un doigt extrême pour l'alignement de logements 30A, 30'A du premier type, est adossé à cette infrastructure 28.

En pratique, et notamment pour des conditions de moulage, les doigts 32 élastiquement déformables sont chacun évidés par un ajour 34 parallèlement aux logements 30A, 30'A qu'ils délimitent.

Indépendamment des doigts 32 extrêmes, chacun des doigts 32 est en commun entre deux logements 30A, 30'A, à savoir, un logement 30A de plus petite largeur L et un logement 30'A de plus grande largeur L'.

Pour chacun des logements 30A, 30'A, les deux doigts 32 délimitant un tel logement 30A, 30'A comportent, chacun, en direction l'un de l'autre, un cran de retenue 35, 35' précédé d'un chanfrein d'engagement 36, 36'.

Compte tenu du déport vers l'extérieur des logements 30A de plus petite largeur L par rapport aux logements 30'A de plus grande largeur L', les crans de retenue 35 des logements 30A s'étendent à un niveau différent de celui auquel s'étendent les crans de retenue 35' des logements 30'A.

Conjointement, les chanfreins d'engagement 36 des logements 30A ont une extension moindre que celle des chanfreins d'engagement 36' des logements 30'A.

Dans la forme de réalisation représentée, un logement 30B du deuxième type comporte, d'une part, l'espace 37 s'étendant entre les bras 31 de la superstructure 29, la distance séparant l'un de l'autre ces bras 31 étant par construction faite sensiblement égale à la largeur des barreaux 10B, 10'B tout en étant légèrement supérieure à cette largeur, et, d'autre part, pour la réception des retours en équerre 16 de ces barreaux 10B, 10'B, deux encoches 38, qui, affectant chacune respectivement le flanc interne des deux bras 31, sont établies en correspondance l'une avec l'autre d'un de ces bras 31 à l'autre.

En pratique, il y a un alignement d'encoches 38 sur le flanc interne de l'un et de l'autre des bras 31, et ces encoches 38 sont établies à un pas P' régulier choisi pour être sensiblement égal à la distance séparant des retours en équerre 16 d'un barreau 10'B les languettes 19 de ce barreau 10'B.

En pratique, également, l'encoche 38 la plus proche de l'infrastructure 28 est établie à une distance de celle-ci au moins égale à la hauteur des ailes latérales 15 des barreaux 10B, 10'B.

Dans la forme de réalisation représentée, entre chaque encoche 38 et l'infrastructure 28, il y a au moins un bossage 39 en saillie sur le flanc interne des bras 31.

En pratique, seul un tel bossage 39 est prévu pour chaque encoche 38, et il s'agit d'un bossage qui, tout en étant largement allongé, est sensiblement arrondi.

Dans la forme de réalisation représentée, certaines au moins des encoches 38 des bras 31 sont chacune établies au droit d'un logement 30A, 30'A du premier type.

En pratique, les encoches 38 sont toutes chacune respectivement établies au droit d'un logement 30A de plus petite largeur L, et elles sont donc imbriquées avec les logements 30'A de plus grande largeur L'.

Dans la forme de réalisation représentée, les bras 31 de la superstructure 29 sont réunis l'un à l'autre, à leur extrémité libre, par une traverse 40, qui s'étend globalement parallèlement à l'infrastructure 28, et dont chacune des faces forme les flancs d'une encoche 38.

Pour l'encoche 38 qui se situe du côté de la face avant de cette traverse 40, l'autre flanc est formé par un ergot 42 prolongeant le flanc externe du doigt 32 correspondant.

Dans la forme de réalisation représentée, la traverse 40 comporte, latéralement, un prolongement 43, qui s'étend en porte à faux par rapport aux bras 31, et qui, pour des raisons qui apparaîtront ci-après, présente, à distance de ceux-ci, un évidement 44.

Dans la forme de réalisation représentée, ce prolongement 43 a, en plan, un contour de triangle isocèle, et l'évidement 44 est une encoche qui l'entaille transversalement suivant sa médiatrice à compter du sommet de ce contour.

Eu égard à la traverse 40 qui la referme du côté opposé à l'infrastructure 28, la superstructure 29 a, globalement, en plan, une forme de cadre.

Suivant l'invention, l'infrastructure 28 est, corollairement, équipée d'au moins deux moyens d'assujettissement de types différents.

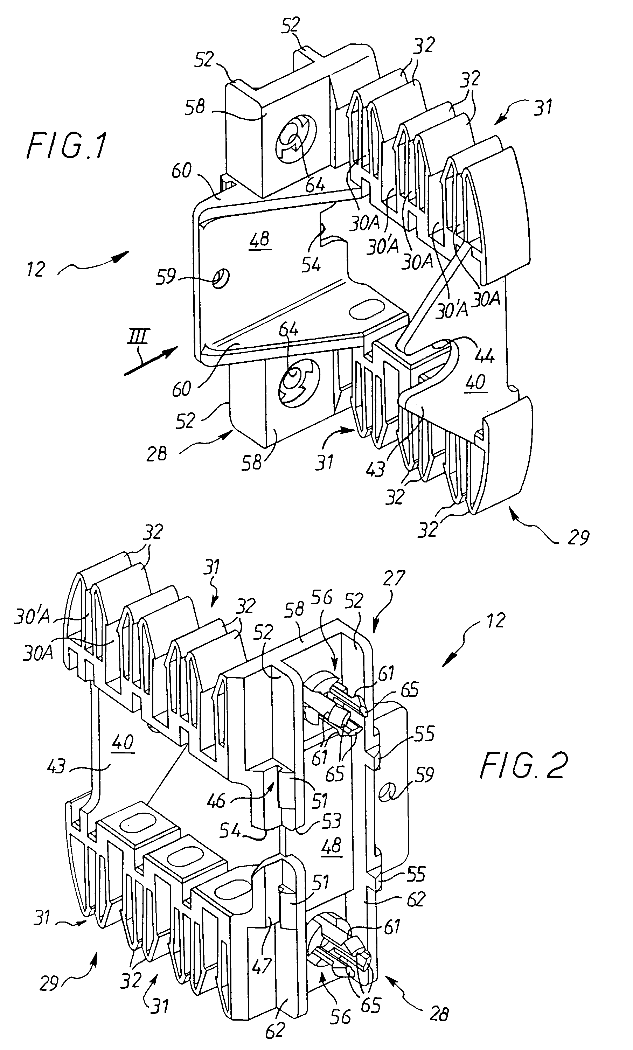

Plus précisément, elle comporte, latéralement, dos à dos, dans la forme de réalisation représentée, à titre de moyens d'assujettissement d'un premier type, deux rainures 46, figures 2 et 5, par lesquelles elle est apte à être engagée sur deux retours en équerre 27, dirigés l'un vers l'autre, d'un élément de châssis 11B.

En pratique, ces rainures 46 s'étendent globalement orthogonalement par rapport aux logements 30A, 30'A, 30B de la superstructure 29.

Dans la forme de réalisation représentée, les rainures 46 ont l'un de leurs flancs, en l'espèce le flanc interne 47, formé par une platine 48, qui s'étend entre les bras 31 de la superstructure 29, à la racine de ceux-ci, et parallèlement à la traverse 40, en débordant en porte à faux des bras 31 dans le même sens que cette dernière, tandis que l'autre de leurs flancs, en l'espèce le flanc externe 50, est formé par au moins un crochet 51 que la platine 48 présente en saillie sur sa surface arrière, c'est-à-dire sur sa surface opposée aux bras 31.

Dans la forme de réalisation représentée, deux crochets 51 sont prévus à distance l'un de l'autre pour chaque rainure 46, et ces crochets 51 sont adossés à une nervure 52.

Pour ceux des crochets 51 qui sont au droit des bras 31, la nervure 52 est interrompue localement par une encoche 53, et la platine 48 présente en correspondance un évidement 54, qui est allongé de l'un à l'autre des flancs de cette encoche 53, et qui, dans la forme de réalisation représentée, est une encoche débouchant latéralement à l'arrière de la superstructure 29.

Les deux autres crochets 51 sont déportés latéralement par rapport aux bras 31.

Au droit de chacun d'eux s'étend en saillie sur la tranche de la nervure 52 un ergot 55 épointé en direction de leur chanfrein d'engagement.

Dans la forme de réalisation représentée, l'infrastructure 28 comporte, également, en saillie sur sa surface arrière, à titre de moyens d'assujettissement d'un deuxième type, au moins un pion 56, par lequel elle est apte à être engagée dans un perçage 23 des éléments de châssis 11A, 11'A.

En pratique, dans la forme de réalisation représentée, l'infrastructure 28 comporte, à distance l'un de l'autre, deux pions 56.

Ces pions 56 affectent, chacun respectivement, deux consoles 58, qui s'étendent latéralement au droit des bras 31 de la superstructure 29, mais en porte à faux par rapport à ceux-ci, de part et d'autre de la platine 48.

Tout en étant d'un seul tenant avec la platine 48, les consoles 58 sont décalées transversalement par rapport à celle-ci, en étant plus proches de l'extrémité libre des bras 31 qu'elle.

Les nervures 52, qui, ainsi qu'il apparaîtra ci-après, sont des nervures d'appui, se prolongent en continu sur l'une et l'autre des consoles 58.

La nervure 52, la plus éloignée des bras 31 de la superstructure 29, forme en pratique un bord tombé pour les consoles 58, le long du bord libre de celles-ci, cependant que, au contraire, la platine 48 se prolonge au-delà d'elle.

Pour des raisons qui apparaîtront ci-après, la platine 48 présente, dans sa zone médiane, à proximité de son bord libre, un perçage 59, de contour arrondi.

A la jonction entre la platine 48 et les consoles 58, l'infrastructure 28 présente, transversalement, sur sa surface avant, des ailes de renfort 60, qui, de contour triangulaire, s'étendent le long des bords latéraux de la platine 48, du bord libre de celle-ci jusqu'aux bras 31 de la superstructure 29.

En pratique, chacun des pions 56 présente latéralement en saillie un épaulement 61 qui, tourné vers la surface arrière de l'infrastructure 28, forme crochet, et, à chacun d'eux, il est associé, entre leur racine et cet épaulement 61, un épaulement 62 tourné en direction opposée à celui-ci.

Dans la forme de réalisation représentée, l'épaulement 62 est formé par la tranche des nervures 52.

En pratique, la distance D1 séparant l'un de l'autre les épaulements 61, 62 est sensiblement égale à l'épaisseur de la face avant des éléments de châssis 11A, 11'A.

Dans la forme de réalisation représentée, chacun des pions 56 présente, axialement, un perçage 64.

En pratique, chacun des pions 56 est fractionné circulairement en au moins deux pattes 65 élastiquement déformables régulièrement réparties circulairement autour du perçage 64.

Ces pattes 65 sont au nombre de trois dans la forme de réalisation représentée.

En pratique, la distance D2 séparant l'un de l'autre les deux pions 56 est égale à un multiple du pas P des perçages 23 des éléments de châssis 11A, 11'A.

En variante, elle peut être égale à ce pas P.

Globalement, l'accessoire de support 12 suivant l'invention est, par exemple, en matière isolante, et, plus précisément, en matière synthétique.

Il est alors réalisé d'un seul tenant, par moulage.

Pour sa mise en oeuvre, l'accessoire de support 12 suivant l'invention est, par exemple, rapporté sur un élément de châssis 11A, comme représenté à la figure 9A.

Il est alors encliqueté, à force, par les pions 56 de son infrastructure 28, dans deux perçages 23 de cet élément de châssis 11A.

Si désiré, des vis, non représentées, peuvent être vissées dans le perçage 64 de ses pions 56, pour le verrouiller sur l'élément de châssis 11A, ces vis s'opposant à toute déformation des pattes 65 élastiquement déformables de ces pions 56 de nature à leur permettre d'échapper aux perçages 23.

Dans un tel cas, la tête d'une telle vis trouve sa place dans le lamage prévu à cet effet au débouché d'un tel perçage 64, au bénéfice de l'isolation électrique.

Suivant un processus semblable au précédent, et tel que représenté à la figure 9B, l'accessoire de support 12 suivant l'invention peut également être rapporté sur un élément de châssis 11'A.

Dans le cas où l'accessoire de support 12 suivant l'invention est ainsi rapporté sur un élément de châssis 11A ou 11'A, il porte sur celui-ci par ses nervures 52, ce qui permet de garantir la distance D1 dont dépend son encliquetage sur cet élément de châssis 11A ou 11'A.

Comme représenté sur la figure 9C, il peut également être rapporté sur un élément de châssis 11B.

Il est alors encliqueté sur deux retours en équerre 27 de cet élément de châssis 11B dirigés l'un vers l'autre, et, ainsi qu'on le comprendra, les ergots 55 qu'il comporte facilitent son engagement sur cet élément de châssis 11B.

Les dispositions sont telles que, comme représenté, le perçage 59 de la platine 48 de l'infrastructure 28 se trouve alors au droit de l'interstice 26 séparant l'une de l'autre les deux nervures 25 d'une même paire de cet élément de châssis 11B.

Si désiré, l'accessoire de support 12 peut alors être verrouillé sur l'élément de châssis 11B, à l'aide d'une vis, non représentée, qui, à la faveur du perçage 59, vient s'insérer entre ces deux nervures 25.

Dans tous les cas, un démontage reste possible.

Dans le cas d'un montage sur l'élément de châssis 11B, ce démontage peut se trouver facilité par l'évidement 54, cet évidement 54 permettant à la lame d'un tournevis de venir porter, en faisant levier, sur le retour en équerre 26 de la nervure 25 correspondante de cet élément de châssis 11B.

Bien entendu, pour un même barreau 10A, 10'A, 10B, 10'B, deux accessoires de support 12 sont mis en oeuvre, à un même niveau, pour intervenir, chacun respectivement, aux deux extrémités d'un tel barreau 10A, 10'A, 10B, 10'B.

Pour les barreaux 10A, 10'A, ce sont les logements 30A, 30'A du premier type qui sont utilisés, par simple insertion entre les doigts 32 correspondants, à la faveur d'une déformation élastique momentanée de l'un au moins de ceux-ci.

Ainsi qu'on le notera, les logements 30A, 30'A permettent, pour chaque bras 31, trois positions d'implantation différentes pour les barreaux 10A, 10'A, à des distances différentes de l'infrastructure 28.

Pour un barreau 10B, c'est, par exemple, un logement 30B du deuxième type qui est utilisé, dans l'espace 37 intermédiaire entre les bras 31, par engagement des retours en équerre 16 de ce barreau 10B dans telle ou telle des encoches 38 correspondantes.

Comme précédemment, trois positions d'implantation sont donc envisageables pour un tel barreau 10B, à des distances différentes de l'infrastructure 28, et, pour chacune d'elles, les bossages 39 des bras 31 font avantageusement frein à l'égard du barreau 10B.

Mais une quatrième position d'implantation, plus avancée, est également possible.

Comme représenté à la figure 10D, elle implique de rapporter, sur la traverse 40, au droit de l'évidement 44 de son prolongement 43, une agrafe 67, porteuse d'un écrou, non visible sur la figure 10D, et de mettre en oeuvre une vis 68, à la faveur, d'une part, du perçage 18 correspondant de la partie médiane 14 d'un tel barreau 10B, et, d'autre part, de l'évidement 44 précédent.

Pour un barreau 10'B, le processus est du même type, mais, pour les trois positions d'implantation prévues dans l'espaca 37 intermédiaire entre les bras 31, ce barreau 10'B est alors en prise avec les encoches 38 tant par ses retours en équerre 16 que ses languettes 19.

Pour la position d'implantation plus avancée, représentée sur la figure 10E, le barreau 10'B n'est en prise que par ses seules languettes 19 avec des encoches 38, en l'espèce celles présentes sur la face avant de la traverse 40.

Bien entendu, plusieurs barreaux 10A, 10'A, 10B, 10'B, de même type ou de types différents, peuvent être rapportés sur un même accessoire de support 12.

Cela est le cas, d'ailleurs, pour deux barreaux 10A, 10'A sur les figures 10A, 10B.

Dans tous les cas, si l'engagement des barreaux 10A, 10'A sur un accessoire de support 12 peut être effectué après la mise en place de celui-ci, l'engagement d'un barreau 10B, 10'B doit normalement se faire avant cette mise en place, par l'extrémité correspondante d'un tel barreau 10B, 10'B, sauf en ce qui concerne la position d'implantation la plus avancée.

Pour cette dernière, un barreau 10B peut en effet être simplement rapporté de l'avant sur l'accessoire de support 12.

Dans le cas de barreaux 10A, 10'A du premier type, il peut être souhaité de mettre en place un capot de protection.

Il peut s'agir, soit d'un capot se fixant sur l'accessoire de support 12 suivant l'invention au niveau des logements 30A de celui-ci les plus éloignés de l'infrastructure 28, soit d'un capot fixé sur sa traverse 40 par une agrafe 67 et une vis coopérant avec celle-ci.

Dans le cas d'une implantation sur un élément de châssis 11A, l'accessoire de support 12 suivant l'invention peut également être rapporté sur l'autre aile latérale 21 de celui-ci, notamment dans le cas où cet élément de châssis 11A est lui-même implanté à mi-profondeur dans l'armoire qu'il équipe.

Dans ce cas, les barreaux 10B, 10'B sont rapportés sur cet accessoire de support 12 de façon à présenter leur concavité vers l'avant, comme précédemment.

Par rapport à l'accessoire de support 12, ils ont donc alors une orientation inverse de la précédente.

## Revendications

1. Accessoire de support pour l'assujettissement d'un barreau (10A, 10'A, 10B, 10'B) à un autre élément de châssis (11A, 11'A, 11B), du genre comportant, d'une part, une infrastructure (28), qui est propre à permettre de le rapporter sur l'élément de châssis (11A, 11'A, 11B) à équiper, et, d'autre part, une superstructure (29), qui comporte au moins deux logements (30A, 30'A, 30B) par chacun desquels elle est apte à recevoir l'une des extrémités d'un barreau (10A, 10B, 10'A, 10'B) à assujettir à l'élément de châssis (11A, 11'A, 11B), cette superstructure (29) comportant, parallèlement l'un à l'autre, deux bras (31), avec, entre ces bras (31), du flanc interne de l'un au flanc interne de l'autre, au moins un logement (30B), caractérisé en ce que l'extrémité du barreau (10A, 10B, 10'A, 10'B) est reçue par simple emboîtement dans chacun des logements (30A, 30'A, 30B), en ce qu'il y a, sur le flanc externe de l'un au moins des bras (31), au moins un logement (30A, 30'A) d'un premier type, et, entre ces bras (31), du flanc interne de l'un au flanc interne de l'autre, au moins un logement (30B) d'un deuxième type différent du premier, et en ce qu'un logement (30A, 30'A) du premier type se réduit à une fente formée entre deux doigts (32), dont l'un, au moins, est élastiquement déformable, et qui comportent, chacun, en direction l'un de l'autre, un cran de retenue (35, 35') précédé d'un chanfrein d'engagement (36, 36').

2. Accessoire de support suivant la revendication 1, caractérisé en ce que le doigt (32) élastiquement déformable est évidé parallèlement au logement (30A, 30'A) qu'il délimite.

3. Accessoire de support suivant l'une quelconque des revendications 1 et 2, caractérisé en ce que, au repos, les deux flancs d'un logement (30A, 30'A) convergent l'un vers l'autre, de la racine des doigts (32) correspondants à l'extrémité libre de ceux-ci.

4. Accessoire de support suivant l'une quelconque des revendications 1 à 3, caractérisé en ce que, sur le flanc externe de l'un au moins des bras (31), il y a un alignement de logements (30A, 30'A) du premier type.

5. Accessoire de support suivant la revendication 4, caractérisé en ce que deux au moins des logements (30A, 30'A) du premier type ont des largeurs (L, L') différentes.

6. Accessoire de support suivant la revendication 5, caractérisé en ce qu'il y a, en alternance, des logements (30A) de plus petite largeur (L) et des logements (30'A) de plus grande largeur (L').

7. Accessoire de support suivant la revendication 6, caractérisé en ce que les logements (30A) de plus petite largeur (L) sont décalés transversalement par rapport aux logements (30'A) de plus grande largeur (L').

8. Accessoire de support suivant l'une quelconque des revendications 4 à 7, caractérisé en ce que, pour l'un au moins des logements (30A, 30'A) du premier type, les deux doigts (32) sont élastiquement déformables.

9. Accessoire de support suivant l'une quelconque des revendications 1 à 8, caractérisé en ce qu'il y a au moins un logement (30A, 30'A) du premier type sur le flanc externe de l'un et de l'autre des bras (31).

10. Accessoire de support suivant les revendications 4 et 9, prises conjointement, caractérisé en ce que, d'un bras (31) à l'autre, les alignements de logements (30A, 30'A) du premier type sont identiques.

11. Accessoire de support suivant l'une quelconque des revendications 1 à 10, caractérisé en ce qu'un logement (30B) du deuxième type comporte deux encoches (38), qui, affectant chacune respectivement le flanc interne des deux bras (31), sont établies en correspondance l'une avec l'autre d'un de ces bras (31) à l'autre.

12. Accessoire de support suivant la revendication 11, caractérisé en ce qu'il y a un alignement d'encoches (38) sur le flanc interne de l'un et de l'autre des bras (31).

13. Accessoire de support suivant la revendication 12, caractérisé en ce que, entre chaque encoche (38) et l'infrastructure (28), il y a au moins un bossage (39) en saillie sur le flanc interne des bras (31).

14. Accessoire de support suivant, prises conjointement, d'une part, la revendication 9, et, d'autre part, l'une quelconque des revendications 12, 13, caractérisé en ce que certaines au moins des encoches (38) sont chacune établies au droit d'un logement (30A, 30'A).

15. Accessoire de support suivant les revendications 7 et 14, prises conjointement, caractérisé en ce que les encoches (38) sont imbriquées avec les logements (30'A) de plus grande largeur (L').

16. Accessoire de support suivant l'une quelconque des revendications 11 à 15, caractérisé en ce que, à leur extrémité libre, les bras (31) sont réunis l'un à l'autre par une traverse (40) dont chacune des faces forme l'un des flancs d'une encoche (38).

17. Accessoire de support suivant la revendication 16, caractérisé en ce que la traverse (40) comporte latéralement un prolongement (43), qui s'étend en porte à faux par rapport aux bras (31), et qui présente, à distance de ceux-ci, un évidement (44) .

18. Accessoire de support suivant l'une quelconque des revendications 1 à 17, caractérisé en ce que l'infrastructure (28) est équipée d'au moins deux moyens d'assujettissement de types différents.

19. Accessoire de support suivant l'une quelconque des revendications 1 à 18, caractérisé en ce que l'infrastructure (28) comporte, latéralement, dos à dos, à titre de moyens d'assujettissement, deux rainures (46) par lesquelles elle est apte à être engagée sur deux retours en équerre (27), dirigés l'un vers l'autre, d'un élément de châssis (11B).

20. Accessoire de support suivant la revendication 19, caractérisé en ce que les rainures (46) de l'infrastructure (28) s'étendent orthogonalement par rapport aux logements (30A, 30'A) de la superstructure (29).

21. Accessoire de support suivant l'une quelconque des revendications 17, 18, caractérisé en ce que les rainures (46) de l'infrastructure (28) ont l'un de leurs flancs formé par une platine (48) qui s'étend entre les bras (31), tandis que l'autre de leurs flancs est formé par au moins un crochet (51) que présente en saillie cette platine (48) sur sa surface arrière.

22. Accessoire de support suivant la revendication 21, caractérisé en ce que la platine (48) présente au moins un évidement (54) ou un perçage (59).

23. Accessoire de support suivant l'une quelconque des revendications 1 à 22, caractérisé en ce que l'infrastructure (28) comporte, en saillie sur sa surface arrière, à titre de moyens d'assujettissement, au moins un pion (56), par lequel elle est apte à être engagée dans un perçage (23) d'un élément de châssis (11A, 11'A).

24. Accessoire de support suivant la revendication 23, caractérisé en ce que le pion (56) présente latéralement en saillie un épaulement (61), qui, tourné vers la surface arrière de l'infrastructure (28), forme crochet, et il lui est associé, entre sa racine et cet épaulement (61), un épaulement (62) tourné en direction opposée à ce dernier.

25. Accessoire de support suivant l'une quelconque des revendications 23, 24, caractérisé en ce que le pion (56) présente, axialement, un perçage (64).

26. Accessoire de support suivant la revendication 25, caractérisé en ce que le pion (56) est fractionné circulairement en au moins deux pattes (65) élastiquement déformables.

27. Accessoire de support suivant l'une quelconque des revendications 23 à 26, caractérisé en ce que le pion (56) affecte une console (58) qui s'étend latéralement au droit d'un des bras (31) de la superstructure (29), mais en porte à faux par rapport à celui-ci.

28. Accessoire de support suivant les revendications 21 et 27, prises conjointement, caractérisé en ce que la console (58) est décalée transversalement par rapport à la platine (48).

29. Accessoire de support suivant l'une quelconque des revendications 27, 28, caractérisé en ce que la console (58) est d'un seul tenant avec la platine (48), et, à sa jonction avec celle-ci, l'infrastructure (28) présente transversalement des ailes de renfort (60).

30. Accessoire de support suivant l'une quelconque des revendications 23 à 29, caractérisé en ce qu'il y a, à distance l'un de l'autre, deux pions (56).

31. Accessoire de support suivant l'une quelconque des revendications 1 à 30, caractérisé en ce qu'il est en matière isolante.

## Patentansprüche

1. Tragzubehör für die Befestigung einer Schiene (10A, 10'A, 10B, 10'B) an einem Rahmenelement (11A, 11'A, 11B), umfassend einerseits einen Unterbau (28), der dafür geeignet ist, seine Anbringung an dem auszurüstenden Rahmenelement (11A, 11'A), 11B) zu gestatten, und andererseits einen Aufbau (29), der mindestens zwei Aufnahmen (30A, 30'A, 30B) aufweist, mittels derer er eines der Enden einer am Rahmenelement (11A, 11'A, 11B) zu befestigenden Schiene (10A, 10B, 10'A, 10'B) aufnehmen kann, wobei dieser Aufbau (29) parallel zueinander zwei Arme (31) aufweist, zwischen denen von der Innenflanke des einen Arms (31) zur Innenflanke des anderen Arms (31) mindestens eine Aufnahme (30B) vorgesehen ist, dadurch gekennzeichnet, daß das Ende der Schiene (10A, 10B, 10'A, 10'B) durch einfaches Einstecken in jeder der Aufnahmen (30A, 30'A, 30B) aufgenommen ist, daß auf der Außenflanke mindestens eines der Arme (31) mindestens eine Aufnahme (30A, 30'A) von einem ersten Typ und zwischen diesen Armen (31) von der Innenflanke des einen zur Innenflanke des anderen mindestens eine Aufnahme (30B) von einem zweiten, sich vom ersten unterscheidenden Typ vorgesehen ist und daß eine Aufnahme (30A, 30'A) vom ersten Typ sich auf einen Schlitz reduziert, der zwischen zwei Fingern (32) gebildet ist, von denen mindestens einer elastisch verformbar ist und die jeweils in Richtung aufeinander eine Rückhalteraste (35, 35') aufweisen, der eine Einführungsschräge (36, 36') vorhergeht.

2. Tragzubehör nach Anspruch 1, dadurch gekennzeichnet, daß der elastisch verformbare Finger (32) parallel zur Aufnahme (30A, 30'A), die er abgrenzt, ausgespart ist.

3. Tragzubehör nach einem der Ansprüche 1 und 2, dadurch gekennzeichnet, daß die beiden Flanken einer Aufnahme (30A, 30'A) im Ruhezustand von der Wurzel der entsprechenden Finger (32) auf deren freies Ende zu konvergieren.

4. Tragzubehör nach einem der Ansprüche 1 bis 3, dadurch gekennzeichnet, daß auf der Außenflanke mindestens eines der Arme (31) eine Aneinanderreihung von Aufnahmen (30A, 30'A) des ersten Typs vorgesehen ist.

5. Tragzubehör nach Anspruch 4, dadurch gekennzeichnet, daß mindestens zwei der Aufnahmen (30A, 30'A) des ersten Typs verschiedene Breiten (L, L') haben.

6. Tragzubehör nach Anspruch 5, dadurch gekennzeichnet, daß abwechselnd Aufnahmen (30A) kleinerer Breite (L) und Aufnahmen (30'A) größerer Breite (L') vorgesehen sind.

7. Tragzubehör nach Anspruch 6, dadurch gekennzeichnet, daß die Aufnahmen (30A) kleinerer Breite (L) bezüglich der Aufnahmen (30'A) größerer Breite (L') in Querrichtung versetzt sind.

8. Tragzubehör nach einem der Ansprüche 4 bis 7, dadurch gekennzeichnet, daß bei mindestens einer der Aufnahmen (30A, 30'A) des ersten Typs beide Finger (32) elastisch verformbar sind.

9. Tragzubehör nach einem der Ansprüche 1 bis 8, dadurch gekennzeichnet, daß mindestens eine Aufnahme (30A, 30'A) des ersten Typs auf der Außenflanke des einen und des anderen Arms (31) vorgesehen ist.

10. Tragzubehör nach den Ansprüchen 4 und 9 zusammen, dadurch gekennzeichnet, daß die Aneinanderreihungen von Aufnahmen (30A, 30'A) des ersten Typs von einem Arm (31) zum anderen identisch sind.

11. Tragzubehör nach einem der Ansprüche 1 bis 10, dadurch gekennzeichnet, daß eine Aufnahme (30B) des zweiten Typs zwei Nuten (38) aufweist, die jeweils auf der Innenflanke der beiden Arme (31) vorgesehen sind und von einem dieser Arme (31) zum anderen in Entsprechung zueinander angeordnet sind.

12. Tragzubehör nach Anspruch 11, dadurch gekennzeichnet, daß auf der Innenflanke des einen und des anderen Arms (31) eine Anneinanderreihung von Nuten (38) vorgesehen ist.

13. Tragzubehör nach Anspruch 12, dadurch gekennzeichnet, daß zwischen jeder Nut (38) und dem Unterbau (28) mindestens eine auf der Innenflanke der Arme (31) vorstehende Erhebung (39) vorgesehen ist.

14. Tragzubehör nach einerseits Anspruch 9 und andererseits einem der Ansprüche 12, 13 zusammen, dadurch gekennzeichnet, daß mindestens manche der Nuten (38) jeweils auf Höhe einer Aufnahme (30A, 30'A) angeordnet sind.

15. Tragzubehör nach den Ansprüchen 7 und 14 zusammen, dadurch gekennzeichnet, daß die Nuten (38) mit den Aufnahmen (30'A) größerer Breite (L') ineinandergreifen.

16. Tragzubehör nach einem der Ansprüche 11 bis 15, dadurch gekennzeichnet, daß die Arme (31) an ihrem freien Ende miteinander durch ein Querelement (40) verbunden sind, von dem jede der Seiten eine der Flanken einer Nut (38) bildet.

17. Tragzubehör nach Anspruch 16, dadurch gekennzeichnet, daß das Querelement (40) seitlich eine Verlängerung (43) aufweist, die sich bezüglich der Arme (31) auskragend erstreckt und die in einem Abstand von diesen eine Aussparung (44) aufweist.

18. Tragzubehör nach einem der Ansprüche 1 bis 17, dadurch gekennzeichnet, daß der Unterbau (28) mit mindestens zwei Befestigungsmitteln von verschiedenen Typen ausgerüstet ist.

19. Tragzubehör nach einem der Ansprüche 1 bis 18, dadurch gekennzeichnet, daß der Unterbau (28) seitlich Rücken an Rücken als Befestigungsmittel zwei Nuten (46) aufweist, mittels derer er auf zwei aufeinander zu gerichtete, rechtwinklige Abwinklungen (27) eines Rahmenelements (11B) aufgesteckt werden kann.

20. Tragzubehör nach Anspruch 19, dadurch gekennzeichnet, daß die Nuten (46) des Unterbaus (28) sich rechtwinklig zu den Aufnahmen (30A, 30'A) des Aufbaus (29) erstrecken.

21. Tragzubehör nach einem der Ansprüche 17, 18, dadurch gekennzeichnet, daß eine der Flanken der Nuten (46) des Unterbaus (28) von einer Platte (48) gebildet wird, die sich zwischen den Armen (31) erstreckt, während die andere ihrer Flanken von mindestens einem Haken (51) gebildet wird, den diese Platte (48) auf ihrer Rückseite vorstehend aufweist.

22. Tragzubehör nach Anspruch 21, dadurch gekennzeichnet, daß die Platte (48) mindestens eine Aussparung (54) oder eine Bohrung (59) aufweist.

23. Tragzubehör nach einem der Ansprüche 1 bis 22, dadurch gekennzeichnet, daß der Unterbau (28) auf seiner Rückseite vorstehend als Befestigungsmittel mindestens einen Zapfen (56) aufweist, mit dem er in eine Bohrung (23) eines Rahmenelements (11A, 11'A) eingesteckt werden kann.

24. Tragzubehör nach Anspruch 23, dadurch gekennzeichnet, daß der Zapfen (56) seitlich vorstehend eine einen Haken bildende Schulter (61) aufweist, die der Rückseite des Unterbaus (28) zugewandt ist, und daß ihm zwischen seiner Wurzel und dieser Schulter (61) eine zu dieser Schulter entgegengesetzt gerichtete Schulter (62) zugeordnet ist.

25. Tragzubehör nach einem der Ansprüche 23, 24, dadurch gekennzeichnet, daß der Zapfen (56) axial eine Bohrung (64) aufweist.

26. Tragzubehör nach Anspruch 25, dadurch gekennzeichnet, daß der Zapfen (56) kreismäßig in mindestens zwei elastisch verformbare Zungen (65) geteilt ist.

27. Tragzubehör nach einem der Ansprüche 23 bis 26, dadurch gekennzeichnet, daß der Zapfen (56) auf einer Konsole (58) angeordnet ist, die sich seitlich auf Höhe eines der Arme (31) des Aufbaus (29), jedoch bezüglich dieses auskragend erstreckt.

28. Tragzubehör nach den Ansprüchen 21 und 27 zusammen, dadurch gekennzeichnet, daß die Konsole (58) in Querrichtung bezüglich der Platte (48) versetzt ist.

29. Tragzubehör nach einem der Ansprüche 27, 28, dadurch gekennzeichnet, daß die Konsole (58) mit der Platte (48) einstückig ausgeführt ist und daß der Unterbau an der Stelle ihrer Verbindung mit dieser Verstärkungsrippen (60) aufweist.

30. Tragzubehör nach einem der Ansprüche 23 bis 29, dadurch gekennzeichnet, daß in einem Abstand voneinander zwei Zapfen (56) vorgesehen sind.

31. Tragzubehör nach einem der Ansprüche 1 bis 30, dadurch gekennzeichnet, daß es aus einem isolierenden Werkstoff besteht.

## Claims

1. A support accessory for fastening a bar (10A, 10'A. 10B. 10'B) to another chassis element (11A, 11'A, 11B) of the kind comprising, on the one hand, an infrastructure (28) which is suitable for permitting it to be fitted to the chassis element (11A, 11'A, 11B) to be equipped and, on the other hand, a superstructure (29) which comprises at least two housings (30A, 30'A, 30B), by each of which it is capable of receiving one of the ends of a bar (10A, 10B, 10'A, 10'B) to be fastened to the chassis element (11A, 11'A, 11B), said superstructure comprising in mutually parallel relationship two arms (31) with, between said arms (31), from the internal flank of one to the internal flank of the other, at least one housing (30B) characterised in that the end of the bar (10A, 10B, 10'A, 10'B) is received by simple fitting engagement into each of the housings (30A, 30'A, 30B), that there is, on the external flank of one at least of the arms (31), at least one housing (30A, 30'A) of a first type and, between said arms (31), from the internal flank of one to the internal flank of the other, at least one housing (30B) of a second type different from the first type, and that a housing (30A, 30'A) of the first type is reduced to a slot formed between two fingers (32) of which one at least is elastically deformable and which each comprise in the direction of each other a retaining catch (35, 35') preceded by an engagement bevel (36, 36').

2. A support accessory according to claim 1 characterised in that the elastically deformable finger (32) is apertured parallel to the housing (30A, 30'A) which it delimits.

3. A support accessory according to either one of claims 1 and 2 characterised in that in the rest condition the two flanks of a housing (30A, 30'A) converge towards each other from the root of the corresponding fingers (32) to the free end thereof.

4. A support accessory according to any one of claims 1 to 3 characterised in that on the external flank of one at least of the arms (31) there is an aligned array of housings (30A, 30'A) of the first type.

5. A support accessory according to claim 4 characterised in that two at least of the housings (30A, 30'A) of the first type are of different widths (L, L').

6. A support accessory according to claim 5 characterised in that there are in alternate relationship housings (30A) of smaller width (L) and housings (30'A) of greater width (L').

7. A support accessory according to claim 6 characterised in that the housings (30A) of smaller width (L) are displaced transversely with respect to the housings (30'A) of greater width (L').

8. A support accessory according to any one of claims 4 to 7 characterised in that, for one at least of the housings (30A, 30'A) of the first type, the two fingers (32) are elastically deformable.

9. A support accessory according to any one of claims 1 to 8 characterised in that there is at least one housing (30A, 30'A) of the first type on the external flank of both of the arms (31).

10. A support accessory according to claims 4 and 9 in combination characterised in that, from one arm (31) to the other, the aligned arrays of housings (30A, 30'A) of the first type are identical.

11. A support accessory according to any one of claims 1 to 10 characterised in that a housing (30B) of the second type comprises two notches (38) which, each respectively involving the internal flank of the two arms (31), are disposed in mutually corresponding positions from one of said arms (31) to the other.

12. A support accessory according to claim 11 characterised in that there is an aligned array of notches (38) on the internal flank of both of the arms (31).

13. A support accessory according to claim 12 characterised in that, between each notch (38) and the infrastructure (28), there is at least one boss portion (39) in projecting relationship on the internal flank of the arms (31).

14. A support accessory according to, taken in combination, on the one hand claim 9 and on the other hand either one of claims 12 and 13 characterised in that some at least of the notches (38) are each disposed in line with a housing (30A, 30'A).

15. A support accessory according to claims 7 and 14 in combination characterised in that the notches (38) are overlapping with the housings (30'A) of greater width (L').

16. A support accessory according to any one of claims 7 to 15 characterised in that, at their free end, the arms (31) are connected to each other by a transverse portion (40), of which each of the faces forms one of the flanks of a notch (38).

17. A support accessory according to claim 16 characterised in that the transverse portion (40) laterally comprises an extension (43) which extends in cantilever relationship with respect to the arms (31) and which has at a spacing from same an opening (44).

18. A support accessory according to any one of claims 1 to 17 characterised in that the infrastructure (28) is equipped with at least two fastening means of different types.

19. A support accessory according to any one of claims 1 to 18 characterised in that the infrastructure (28) comprises laterally in back-to-back relationship as fastening means two grooves (46), by way of which it is capable of being engaged on to two right-angled flange portions (27) which are directed towards each other of a chassis element (11B).

20. A support accessory according to claim 19 characterised in that the grooves (46) of the infrastructure (28) extend orthogonally with respect to the housings (30A, 30'A) of the superstructure (29).

21. A support accessory according to either one of claims 17 and 18 characterised in that the grooves (46) of the infrastructure (28) have one of their flanks formed by a plate (48) which extends between the arms (31) while the other of their flanks is formed by at least one hook (51) which is provided in projecting relationship on said plate (48) on the rear surface thereof.

22. A support accessory according to claim 21 characterised in that the plate (48) has at least one opening (54) or a bore (59).

23. A support accessory according to any one of claims 1 to 22 characterised in that the infrastructure (28) comprises in projecting relationship on its rear surface as fastening means at least one pin portion (56) by way of which it is capable of being engaged into a bore (23) in a chassis element (11A, 11'A).

24. A support accessory according to claim 23 characterised in that the pin portion (56) laterally has in projecting relationship a shoulder (61) which, facing towards the rear surface of the infrastructure (28), forms a hook, and associated therewith between its root and said shoulder (61) is a shoulder (62) which faces in a direction opposite to the latter.

25. A support accessory according to either one of claims 23 and 24 characterised in that the pin portion (56) axially has a bore (64).

26. A support accessory according to claim 25 characterised in that the pin portion (56) is circularly divided into at least two elastically deformable lugs (65).

27. A support accessory according to any one of claims 23 to 26 characterised in that the pin portion (56) involves a bracket (58) which extends laterally in line with one of the arms (31) of the superstructure (29) but in cantilever relationship with respect to said arm.

28. A support accessory according to claims 21 and 27 in combination characterised in that the bracket (58) is displaced transversely with respect to the plate (48).

29. A support accessory according to either one of claims 27 and 28 characterised in that the bracket (58) is in one piece with the plate (48) and at its junction therewith the infrastructure (28) transversely has reinforcing gussets (60).

30. A support accessory according to any one of claims 23 to 29 characterised in that there are two pin portions (56) at a spacing from each other.

31. A support accessory according to any one of claims 1 to 30 characterised in that it is of insulating material.
